(19)

Europäisches
Patentamt
European
Patent Office
Office européen
des brevets

(11) **EP 4 254 569 A1**

(12) **EUROPEAN PATENT APPLICATION**
published in accordance with Art. 153(4) EPC

(43) Date of publication:
**04.10.2023 Bulletin 2023/40**

(21) Application number: **21898497.9**

(22) Date of filing: **18.11.2021**

(51) International Patent Classification (IPC):
*H01M 8/0228* (2016.01)    *H01M 8/021* (2016.01)
*H01M 8/0215* (2016.01)    *H01M 8/0258* (2016.01)
*C25D 9/10* (2006.01)    *C25D 11/34* (2006.01)
*C25F 1/06* (2006.01)    *C23G 1/08* (2006.01)

(52) Cooperative Patent Classification (CPC):
**C23G 1/08; C25D 9/10; C25D 11/34; C25F 1/06;**
**H01M 8/021; H01M 8/0215; H01M 8/0228;**
**H01M 8/0258; Y02E 60/50; Y02P 70/50**

(86) International application number:
**PCT/KR2021/016994**

(87) International publication number:
**WO 2022/114671 (02.06.2022 Gazette 2022/22)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **24.11.2020 KR 20200159375**

(71) Applicant: **POSCO Co., Ltd**
**Pohang-si, Gyeongsangbuk-do 37859 (KR)**

(72) Inventors:
• **KIM, Jong-hee**
  **Daejeon 34200 (KR)**
• **LIM, Kyuwan**
  **Pohang-si Gyeongsangbuk-do 37761 (KR)**
• **SEO, Bo-sung**
  **Pohang-si Gyeongsangbuk-do 37656 (KR)**
• **KIM, Kwangmin**
  **Pohang-si Gyeongsangbuk-do 37669 (KR)**
• **KIM, Young-hwan**
  **Incheon 21998 (KR)**

(74) Representative: **Nederlandsch Octrooibureau**
**P.O. Box 29720**
**2502 LS The Hague (NL)**

(54) **STAINLESS STEEL FOR FUEL CELL SEPARATOR WITH EXCELLENT SURFACE HYDROPHILICITY AND ELECTRICAL CONDUCTIVITY, AND MANUFACTURING METHOD THEREOF**

(57)    Disclosed is a stainless steel for a fuel cell separator having excellent surface hydrophilicity and electrical conductivity. According to an embodiment of a stainless steel for a fuel cell separator having excellent surface hydrophilicity and electrical conductivity, the surface oxide element ratio (1) value below may be 0.2 or more and the contact angle may be 80° or less as measured for the surface of a stainless steel containing 15 wt% or more of Cr by X-ray angle-resolved photoemission spectroscopy using an Al-K$\alpha$ X-ray source under the condition where a take-off angle of photoelectrons is from 12° to 85°.

(1)

$$\frac{\text{Sum of atomic concentrations (at\%) of Cr in Cr oxides and Cr hydroxides}}{\text{Sum of atomic concentrations (at\%) of metal elements in entire oxides and hydroxides}} \quad (1)$$

The Cr oxide represents $Cr_3O_4$, $Cr_2O_3$, $CrO_2$, or $CrO_3$, and the Cr hydroxide represents $CrOOH$, $Cr(OH)_2$, or $Cr(OH)_3$. The entire oxides and hydroxides include the Cr oxide, the Cr hydroxide, an Fe oxide, an Fe hydroxide, and a metal oxide (MO), wherein the metal oxide (MO) includes a mixed oxide, M represents an alloying element contained in a

EP 4 254 569 A1

**(Cont. next page)**

matrix other than Cr and Fe, or a combination thereof, and O represents oxygen.

[FIG. 1A]

**Description**

[Technical Field]

The present disclosure relates to a stainless steel with excellent surface hydrophilicity and electrical conductivity and a manufacturing method thereof, and more particularly, to a stainless steel for a fuel cell separator with excellent surface hydrophilicity and electrical conductivity and a manufacturing method thereof.

[Background Art]

Due to excellent corrosion resistance and ease of processing, stainless steels have been considered as materials for electronic parts and fuel cell separators. However, conventional stainless steels have a problem of insufficient electrical conductivity because a passivated layer formed on the surface serves as an element of through-plane resistance.

The mechanism of the effect of a passivated layer on surface electrical conductivity of stainless steels has not been clearly identified to date. Ni plating has been conducted for materials of electronic parts to enhance surface electrical conductivity of such a passivated layer, or a process of coating a conductive material such as gold, carbon, and a nitride on the surface of stainless steels has been proposed to reduce high contact resistance of the stainless steels for fuel cell separators. However, there are a problem in that manufacturing costs and time increase due to an additional process for the Ni plating or the coating with other coating materials, thereby deteriorating productivity, and a problem in that through-plane resistance of a passivated layer cannot be reduced.

In addition, as another method for improving surface electrical conductivity of stainless steels, a method of refining the surface of the stainless steel has been attempted.

Patent Document 1 discloses a stainless steel for a separator having a low interface contact resistance and high corrosion potential by controlling a surface refining process.

Patent Document 2 discloses a method for manufacturing a stainless steel having excellent corrosion resistance and low contact resistance by immersing a stainless steel including 17 to 23 wt% of Cr in a $[HF] \geq [HNO_3]$ solution.

Patent Document 3 discloses a stainless steel including 15 to 45 wt% of Cr and 0.1 to 5 wt% of Mo, wherein an atomic ratio of Cr to Fe contained in a passivated layer of the stainless steel is 1 or more.

However, the methods disclosed in Patent Documents 1 to 3 are limited because fundamental through-plane resistance of the passivated layer of a stainless steel cannot be lowered by only controlling the Cr/Fe atomic ratio of the passivated layer in a region in several nanometers in size.

Also, in order to use a stainless steel for a fuel cell separator, a flooding phenomenon, in which reaction gases nonuniformly flowing and insufficiently diffused due to water droplets generated not only at a cathode but also at an anode deteriorate performance of a fuel cell, should be prevented.

Although Patent Document 4 discloses that the ability to discharge water is improved by forming scratches on the surface of a land via mechanical friction after forming a separator, manufacturing costs may increase by additionally performing a scratch-forming process or scratch uniformity cannot be obtained.

Although Patent Document 5 discloses that the surface is hydrophilized by plasma treatment after a coating process, manufacturing costs may increase by additionally performing the plasma treatment process in addition to the coating process.

Although Patent Document 6 discloses a final product containing a noble metal (Au) and titanium oxide ($TiO_2$) to obtain hydrophilicity, costs for coating increase and manufacturing costs increase in the case of applying the same to molded products, and thus there are limits to commercialize the product.

Although Patent Document 7 discloses a method of forming an Si-enriched layer on the surface to obtain a surface having hydrophilicity, conductivity decreases in a fuel cell separator in the case of forming an Si oxide that is an insulating material, and thus this method cannot be applied to materials of fuel cell separators.

Patent Document 8 discloses a technique of adjusting a $Cr(OH)_3$/Cr oxide ratio and an average of surface roughness (Ra, arithmetic average roughness) of a stainless steel measured in a rolling longitudinal direction (L direction) and a rolling transverse direction (C direction). However, there are limits to have hydrophilicity by controlling the composition of surface coating layer of a stainless steel including alloying elements containing Ti, Nb and the like other than Cr.

(Related Art Documents)

(Patent Document 1) Korean Patent Laid-open Publication No. 10-2014-0081161 (Published on July 1, 2014)
(Patent Document 2) Korean Patent Laid-open Publication No. 10-2013-0099148 (Published on September 5, 2013)

(Patent Document 3) Japanese Patent Application Laid-open Publication No. 2004-149920 (Published on May 27, 2004)

(Patent Document 4) Korean Patent Publication No. 10-1410479 (Published on June 27, 2014)

(Patent Document 5) Korean Patent Laid-open Publication No. 10-2013-0136713 (Published on December 13, 2013)

(Patent Document 6) Japanese Patent Application Laid-open Publication No. 2009-117114 (Published on May 28, 2009)

(Patent Document 7) Japanese Patent Application Laid-open Publication No. 2007-119856 (Published on May 17, 2007)

(Patent Document 8) Korean Patent Publication No. 10-1729037 (Published on April 17, 2017)

[Disclosure]

[Technical Problem]

To solve the above-described problems, provided is a stainless steel for a fuel cell separator having excellent surface hydrophilicity and electrical conductivity and applicable to a material of a fuel cell separator and a manufacturing method thereof.

[Technical Solution]

In accordance with an aspect of the present disclosure to achieve the above-described objects, a stainless steel for a fuel cell separator has excellent surface hydrophilicity and electrical conductivity, wherein a value of a surface oxide element ratio (1) below is 0.2 or more, when measured on the surface of a stainless steel containing 15 wt% or more of Cr by X-ray angle-resolved photoemission spectroscopy using an Al-K$\alpha$ X-ray source under the condition where a take-off angle of photoelectrons is from 12° to 85°, and a contact angle is 80° or less.

$$(1)$$

$$\frac{\text{Sum of atomic concentrations (at\%) of Cr in Cr oxides and Cr hydroxides}}{\text{Sum of atomic concentrations (at\%) of metal elements in entire oxides and hydroxides}}$$

The Cr oxide represents $Cr_3O_4$, $Cr_2O_3$, $CrO_2$, or $CrO_3$, and the Cr hydroxide represents $CrOOH$, $Cr(OH)_2$, or $Cr(OH)_3$. The entire oxides and hydroxides include the Cr oxide, the Cr hydroxide, an Fe oxide, an Fe hydroxide, and a metal oxide (MO), wherein the metal oxide (MO) includes a mixed oxide, M represents an alloying element contained in a matrix other than Cr and Fe, or a combination thereof, and O represents oxygen.

In the stainless steel for a fuel cell separator having excellent surface hydrophilicity and electrical conductivity of the present disclosure, the surface oxide layer of the stainless steel may have a bandgap energy of 2 eV or less.

In the stainless steel for a fuel cell separator having excellent surface hydrophilicity and electrical conductivity of the present disclosure, the surface oxide layer of the stainless steel may form an ohmic contact with the matrix.

In accordance with another aspect of the present disclosure to achieve the above-described objects, a method for manufacturing the stainless steel for a fuel cell separator having excellent surface hydrophilicity and electrical conductivity according to an embodiment includes a primary surface treatment of immersing a cold-rolled stainless steel sheet in a nonoxidizing acid solution and electrolyzing the stainless steel sheet after the immersing, and a secondary surface treatment of immersing the stainless steel sheet in an oxidizing acid solution, wherein a value of a surface oxide element ratio (1) below is 0.2 or more, when measured on the surface of a stainless steel containing 15 wt% or more of Cr by X-ray angle-resolved photoemission spectroscopy using an Al-K$\alpha$ X-ray source under the condition where a take-off angle of photoelectrons is from 12° to 85°, and a contact angle is 80° or less.

$$(1)$$

$$\frac{\text{Sum of atomic concentrations (at\%) of Cr in Cr oxides and Cr hydroxides}}{\text{Sum of atomic concentrations (at\%) of metal elements in entire oxides and hydroxides}}$$

The Cr oxide represents $Cr_3O_4$, $Cr_2O_3$, $CrO_2$, or $CrO_3$, and the Cr hydroxide represents $CrOOH$, $Cr(OH)_2$, or $Cr(OH)_3$. The entire oxides and hydroxides include the Cr oxide, the Cr hydroxide, an Fe oxide, an Fe hydroxide, and a metal oxide (MO), wherein the metal oxide (MO) includes a mixed oxide, M represents an alloying element contained in a matrix other than Cr and Fe, or a combination thereof, and O represents oxygen.

In the method for manufacturing the stainless steel for a fuel cell separator having excellent surface hydrophilicity and electrical conductivity, the secondary surface treatment includes immersing the cold-rolled stainless steel sheet in the oxidizing acid solution for 5 seconds or more, wherein the oxidizing acid solution is a nitric acid solution with a concentration of 5 wt% or more at 50°C or higher.

[Advantageous Effects]

The present disclosure provides a stainless steel for a fuel cell separator having excellent surface hydrophilicity and electrical conductivity applicable to materials of fuel cell separators by making a surface oxide layer having semiconducting properties and formed on the surface of the stainless steel conductive and imparting hydrophilicity to the surface and a manufacturing method thereof.

According to the present disclosure, provided is a stainless steel for a fuel cell separator having excellent surface hydrophilicity and electrical conductivity in which excellent hydrophilicity with a surface contact angle of 80° or less and a bandgap energy of the surface oxide layer of 2 eV or less may be obtained by controlling the surface oxide element ratio (1) value below to 0.2 or more, when measured on the surface of the stainless steel by X-ray angle-resolved photoemission spectroscopy using an Al-K$\alpha$ X-ray source under the condition where a take-off angle of photoelectrons is from 12° to 85°.

$$(1)$$

$$\frac{\text{Sum of atomic concentrations (at\%) of Cr in Cr oxides and Cr hydroxides}}{\text{Sum of atomic concentrations (at\%) of metal elements in entire oxides and hydroxides}}$$

The Cr oxide represents $Cr_3O_4$, $Cr_2O_3$, $CrO_2$, or $CrO_3$, and the Cr hydroxide represents CrOOH, $Cr(OH)_2$, or $Cr(OH)_3$. The entire oxides and hydroxides include the Cr oxide, the Cr hydroxide, an Fe oxide, an Fe hydroxide, and a metal oxide (MO), wherein the metal oxide (MO) includes a mixed oxide, M represents an alloying element contained in a matrix other than Cr and Fe, or a combination thereof, and O represents oxygen.

According to the present disclosure, a stainless steel for a fuel cell separator having excellent surface hydrophilicity and electrical conductivity may be provided by imparting surface hydrophilicity by lowering the contents of oxides and hydroxides impairing hydrophilicity of the surface oxide layer, other than Cr, and forming an ohmic contact with a matrix.

[Description of Drawings]

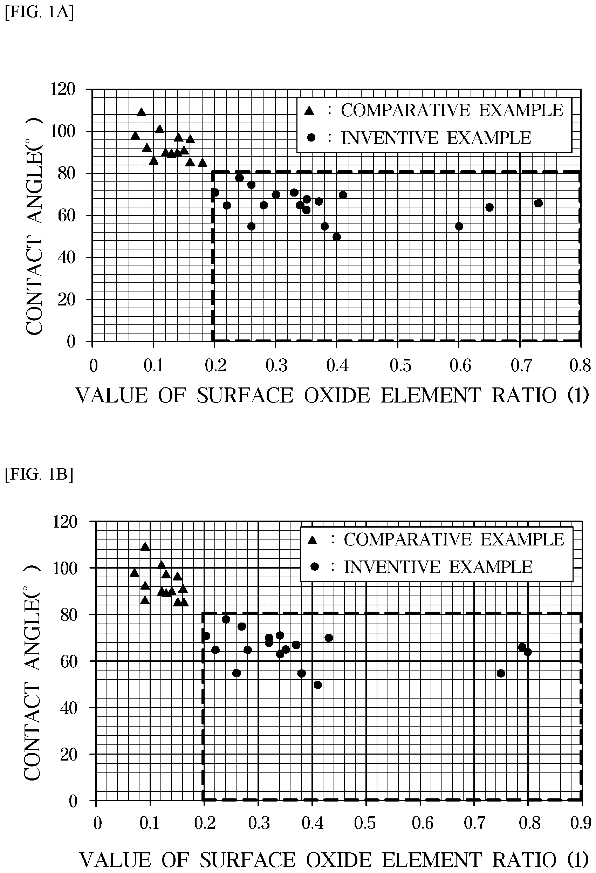

FIGS. 1A and 1B are graphs illustrating correlation between values of the surface oxide element ratio (1) and contact angles based on the results of Table 2.

[Best Mode]

A stainless steel for a fuel cell separator having excellent surface hydrophilicity and electrical conductivity according to an embodiment of the present disclosure may have a surface oxide element ratio (1) value below of 0.2 or more, when measured on the surface of a stainless steel containing 15 wt% or more of Cr by X-ray angle-resolved photoemission spectroscopy using an Al-K$\alpha$ X-ray source under the condition where a take-off angle of photoelectrons is from 12° to 85°, and have a contact angle of 80° or less.

$$(1)$$

$$\frac{\text{Sum of atomic concentrations (at\%) of Cr in Cr oxides and Cr hydroxides}}{\text{Sum of atomic concentrations (at\%) of metal elements in entire oxides and hydroxides}}$$

[Modes of the Invention]

Hereinafter, embodiments of the present disclosure will be described in detail with reference to the accompanying drawings. The embodiments of the present disclosure may, however, be embodied in many different forms and should not be construed as being limited to the embodiments set forth herein. Rather, these embodiments are provided so that this disclosure will be thorough and complete, and will fully convey the concept of the invention to those skilled in the art.

Also, the terms used herein are merely used to describe particular embodiments. An expression used in the singular encompasses the expression of the plural, unless otherwise indicated. Throughout the specification, the terms such as "including" or "having" are intended to indicate the existence of features, operations, functions, components, or combinations thereof disclosed in the specification, and are not intended to preclude the possibility that one or more other features, operations, functions, components, or combinations thereof may exist or may be added.

Meanwhile, unless otherwise defined, all terms used herein have the same meaning as commonly understood by one of ordinary skill in the art to which this disclosure belongs. Thus, these terms should not be interpreted in an idealized or overly formal sense unless expressly so defined herein. As used herein, the singular forms are intended to include the plural forms as well, unless the context clearly indicates otherwise.

The terms "about", "substantially", etc. used throughout the specification means that when a natural manufacturing and a substance allowable error are suggested, such an allowable error corresponds the value or is similar to the value, and such values are intended for the sake of clear understanding of the present invention or to prevent an unconscious infringer from illegally using the disclosure of the present invention.

Also, as used herein, the term "cold-rolled stainless steel sheet" refers to a cold-rolled stainless steel sheet manufactured by a common stainless steel-manufacturing process including hot rolling-heating-cold rolling-annealing and may be interpreted as a cold-rolled stainless steel sheet manufactured by a common method for manufacturing cold-rolled stainless steel sheets within a range clearly recognized by those skilled in the art.

Also, as used herein, the term "surface oxide" refers to an oxide formed on the surface of a stainless steel as a result of spontaneous oxidization of metal element contained in the matrix by external oxygen in the case where the stainless steel is exposed to a temperature of about 200°C or below. The surface oxide may include $Cr_2O_3$ as a main element and may include $SiO_2$, $SiO$, $Si_2O_3$, $MnO$, $MnO_2$, $Mn_2O_3$, $VO$, $V_2O_3$, $V_2O_5$, $NbO$, $NbO_2$, $Nb_2O_5$, $TiO_2$, $FeO$, $Fe_2O_3$, and $Fe_3O_4$. Although examples of the surface oxide are given above, it is to be noted that these examples are made only for illustrative purposes, and the present disclosure is not to be construed as being limited to those examples.

Also, as used herein, the term "surface oxide layer" refers to a layer including a surface oxide according to the present disclosure and may also be interpreted as a passivated layer of a stainless steel.

Also, as used herein, the "Fe oxide" refers to any Fe oxide in the form of an oxide of Fe within a range that may be clearly recognized by those of ordinary skill in the art such as $FeO$, $Fe_2O_3$, and $Fe_3O_4$. The "Fe hydroxide" refers to any Fe hydroxide in the form of a hydroxide of Fe within a range that may be clearly recognized by those of ordinary skill in that art such as $FeOOH$, $Fe(OH)_2$, and $Fe(OH)_3$.

It has been known that a passivated layer of common stainless steels includes $Cr_2O_3$ as a main element and includes $SiO_2$, $SiO$, $Si_2O_3$, $MnO$, $MnO_z$, $Mn_2O_3$, $VO$, $V_2O_3$, $V_2O_5$, $NbO$, $NbO_2$, $Nb_2O_5$, $TiO_2$, $FeO$, $Fe_2O_3$, and $Fe_3O_4$, and thus a contact angle thereof with water exceeds 80° at room temperature. The present inventors have found that surface free energy between a stainless steel and water increases in the case of controlling a surface oxide element ratio (1) value below to 0.2 or more, thereby obtaining the contact angle of 80° or less.

In addition, a passivated layer of common stainless steels is known to have high resistance due to semiconducting properties of an oxide. The present inventors have found that a stainless steel for fuel cell separators have excellent surface electrical conductivity applicable to materials of electric contact and fuel cell separators by making the surface oxide layer having semiconducting properties conductive by controlling the bandgap energy of the surface oxide layer of the stainless steel to 2 eV or less.

According to an embodiment of the present disclosure, the surface oxide element ratio (1) value below may be 0.2 or more, when measured on the surface of the stainless steel by X-ray angle-resolved photoemission spectroscopy (ARPES) using an Al-K$\alpha$ X-ray source under the condition where a take-off angle of photoelectrons is from 12° to 85°.

$$(1)$$

$$\frac{\text{Sum of atomic concentrations (at\%) of Cr in Cr oxides and Cr hydroxides}}{\text{Sum of atomic concentrations (at\%) of metal elements in entire oxides and hydroxides}}$$

The Cr oxide represents $Cr_3O_4$, $Cr_2O_3$, $CrO_2$, or $CrO_3$, and the Cr hydroxide represents $CrOOH$, $Cr(OH)_2$, or $Cr(OH)_3$. The entire oxides and hydroxides include the Cr oxide, the Cr hydroxide, an Fe oxide, an Fe hydroxide, and a metal oxide (MO), wherein the metal oxide (MO) includes a mixed oxide, M represents an alloying element contained in a matrix other than Cr and Fe, or a combination thereof, and O represents oxygen.

The metal oxide (MO) may be, for example, $SiO_2$, $SiO$, $Si_2O_3$, $MnO$, $MnO_z$, $Mn_2O_3$, $VO$, $V_2O_3$, $V_2O_5$, $NbO$, $NbO_2$, $Nb_2O_5$, or $TiO_2$. Although examples of the metal oxide (MO) are listed above, it is to be noted that these examples are made only for illustrative purposes and the technical ideas of the present disclosure are not particularly limited thereto.

The entire oxides and hydroxides include a Cr oxide, a Cr hydroxide, an Fe oxide, an Fe hydroxide, and the metal oxide (MO).

Hereinafter, reasons for limitations on the take-off angle of photoelectrons in the X-ray angle-resolved photoemission spectroscopy will be described, and then reasons for limitations on the surface oxide element ratio (1) value will be described.

In the X-ray angle-resolved photoemission spectroscopy, as the take-off angle of photoelectrons decreases, an analysis depth decreases in a depth direction from the outermost surface of the stainless steel, and as the take-off angle increases, the analysis depth increases. According to the present disclosure, in consideration thereof, in order to analyze the composition of the entire oxides formed on the surface of the stainless steel regardless of the thickness of the stainless steel, the surface of the stainless steel may be measured by X-ray angle-resolved photoemission spectroscopy using an Al-K$\alpha$ X-ray source under the condition where a take-off angle of photoelectrons is from 12° to 85°.

The reason why the surface oxide element ratio (1) value measured under the above-described condition is limited to 0.2 or more is because the surface of the stainless steel has hydrophilicity with a contact angle of 80° or less applicable to a fuel cell environment and semiconducting properties of the passivated layer are converted into conducting properties at this value. In the case where the surface oxide element ratio (1) value is less than 0.2, the contact angle exceeds 80°, so that surface hydrophilicity is lost and the passivated layer has semiconducting properties, and thus the stainless steel is not for fuel cell separators. In order to obtain a stainless steel having excellent surface hydrophilicity and electrical conductivity, the surface oxide element ratio (1) value may be controlled to a range of 0.2 to 0.9.

By controlling the surface oxide element ratio (1) value to 0.2 or more as described above, the surface contact angle may be adjusted to be 80° or less and a bandgap energy of the surface oxide layer may be adjusted to be 2 eV or less according to the present disclosure. As the surface contact angle decreases, hydrophilicity increases, and thus a stainless steel for fuel cell separators may have a low surface contact angle of 70° or less. With a bandgap energy of 0 eV, the surface oxide layer has conducting properties. With a bandgap energy of greater than 0 eV and 2 eV or less, the surface oxide layer has intermediate properties between conducting properties and semiconducting properties, and thereby being suitable for a stainless steel for fuel cell separators.

In addition, according to the present disclosure, the surface oxide element ratio (1) value may be adjusted, more preferably, to 0.26 or more such that the surface oxide layer has a bandgap energy of 0 eV. The bandgap energy of the surface oxide layer of 0 eV means that a conventionally unknown new ohmic contact is formed between the matrix of the stainless steel and the surface oxide layer although the passivated layer is formed of oxides. In other words, this means that the surface oxide layer is converted into a new conductive coated layer capable of forming an ohmic contact with the matrix of the stainless steel.

Steel types of the stainless steel for fuel cell separators having excellent surface electrical conductivity according to the present disclosure are not particularly limited, as long as a bandgap energy of the surface oxide layer is 2 eV or less. According to an embodiment, austenitic, ferritic, and ferritic-austenitic dual-phase stainless steels may be used as the stainless steel of the present disclosure.

In addition, the composition of alloying elements of the stainless steel for fuel cell separators having excellent electrical conductivity according to the present disclosure is not particularly limited. However, a preferred composition is as follows. However, it is necessary to note that the following composition of the alloying elements is only intended to assist understanding of the present disclosure in more detail and are not intended to limit the scope of the present disclosure.

According to an embodiment, the stainless steel according to an embodiment of the present disclosure may include, in percent by weight (wt%), more than 0% and not more than 0.3% of C, more than 0% and not more than 0.3% of N, more than 0% and not more than 0.7% of Si, more than 0% and not more than 10% of Mn, more than 0% and not more than 0.04% of P, more than 0% and not more than 0.02% of S, 15 to 34% of Cr, not more than 25% of Ni, and the remainder of Fe and other inevitable impurities.

Hereinafter, reasons for numerical limitations on the contents of alloy components in the embodiment of the present disclosure will be described in detail. Hereinafter, the unit is wt% unless otherwise stated.

C: more than 0% and not more than 0.3% and N: more than 0% and not more than 0.3%

C and N bind to Cr contained in a steel to form a stable Cr carbonitride, and thus a region in which Cr is locally depleted may be formed, thereby increasing a risk of deterioration of corrosion resistance. Therefore, it is preferable to control the contents of the two elements as low as possible. Thus, the contents of C and N are controlled in the present disclosure such that the C content is more than 0% and not more than 0.3%, and the N content is more than 0% and not more than 0.3.

Si: more than 0% and not more than 0.7%

Si is an element effective on deoxidization. However, an excess of Si may deteriorate toughness and formability, and $SiO_2$ generated during an annealing process deteriorates electrical conductivity and hydrophilicity. In consideration thereof, the Si content is controlled to be more than 0% and not more than 0.7% in the present disclosure.

Mn: more than 0% and not more than 10%

Mn is an element effective on deoxidization. However, MnS that is an Mn inclusion reduces corrosion resistance, and thus the Mn content is controlled to be more than 0% and not more than 10% in the present disclosure.
P: more than 0% and not more than 0.04%

Because P deteriorates not only corrosion resistance but also toughness, the P content is controlled to be more than 0% and not more than 0.04% in the present disclosure.
S: more than 0% and not more than 0.02%

S binds to Mn contained in a steel to form stable MnS, and the formed MnS serves as an origin of corrosion to deteriorate corrosion resistance, and thus it is preferable to control the S content as low as possible. In consideration thereof, the S content may be controlled to be more than 0% and not more than 0.02% in the present disclosure.
Cr: 15 to 34%

Cr is an element enhancing corrosion resistance. Cr is actively added to obtain corrosion resistance in a strongly acidic operating environment of a fuel cell. However, an excess of Cr may deteriorate toughness, and thus the Cr content is controlled from 15 to 34% in the present disclosure in consideration thereof.
Ni: not more than 25%

Ni is an element stabilizing an austenite phase and enhancing corrosion resistance. In addition, Ni is generally contained in more than a certain amount in austenitic stainless steels and ferritic-austenitic dual-phase stainless steels. However, an excess of Ni may deteriorate workability, and thus the Ni content is controlled to be 25% or less in the present disclosure in consideration thereof.

A lower limit of Ni is not particularly limited and Ni may be appropriately contained according to the steel type. For example, a lower limit of the Ni content in austenitic stainless steels or ferritic-austenitic dual-phase stainless steels may be 2.0%. For example, a lower limit of the Ni content in ferritic stainless steels may be less than 2.0%, preferably, 1.0% or less, more preferably, 0.01% or less.

In addition, the stainless steel according to an embodiment may include as optional alloying elements, if required, in percent by weight (wt%), at least one selected from more than 0.01% and not more than 1.5% of Cu, more than 0.01% and not more than 0.6% of V, 0.01 to 5.0% of Mo, 0.01 to 0.5% of Ti, and 0.01 to 0.4% of Nb, in addition to the above-described alloying elements. However, it is necessary to note that the compositions of the optional alloying elements is only intended to assist understanding of the present disclosure and are not intended to limit the scope of the present disclosure.
Cu: more than 0.01% and not more than 1.5%

Cu is an element enhancing corrosion resistance. However, when an excess of Cu is added, Cu is eluted to deteriorate performance of a fuel cell. Thus, the Cu content is controlled to be more than 0% and not more than 1.5% in the present disclosure in consideration thereof.
V: more than 0.01% and not more than 0.6%

V is an element enhancing lifespan characteristics of a fuel cell by inhibiting elution of Fe in an operating environment of the fuel cell. However, an excess of V deteriorates toughness, and thus the V content is controlled to be more than 0.01% and not more than 0.6% in the present disclosure in consideration thereof.
Mo: 0.01 to 5.0%

Mo is an element enhancing corrosion resistance. However, an excess of Mo deteriorates workability, and thus the Mo content is controlled to be from 0.01 to 5.0%.
Ti: 0.01 to 0.5% and Nb: 0.01 to 0.4%

Ti and Nb bind to C and N contained in a steel to form a stable carbonitride and inhibit formation of a region in which Cr is locally depleted, thereby enhancing corrosion resistance. However, an excess of Ti and Nb deteriorates toughness, and thus the Ti content is controlled in the range of 0.01 to 0.5% and the Nb content is controlled in the range of 0.01 to 0.4% in the present disclosure in consideration thereof.

The remaining component of the composition of the present disclosure is iron (Fe). However, the composition may include unintended impurities inevitably incorporated from raw materials or surrounding environments, and thus addition of other alloy components is not excluded. The impurities are not specifically mentioned in the present disclosure, as they are known to any person skilled in the art of manufacturing.

A method for manufacturing the stainless steel for a fuel cell separator having excellent surface hydrophilicity and electrical conductivity according to the present disclosure is not particularly limited, as long as the surface oxide element ratio (1) value is controlled to 0.2 or more.

According to an embodiment of the present disclosure, the stainless steel for a fuel cell separator having excellent surface electrical conductivity according to the present disclosure may be manufactured by surface-treating a cold-rolled steel sheet prepared according to a common stainless steel-manufacturing process. The surface treatment according to an embodiment may be performed in two stages: primary surface treatment including immersing the steel sheet in a nonoxidizing acid solution or electrolyzing the steel sheet after immersion, and secondary surface treatment including immersing the steel sheet in an oxidizing acid solution.

The primary surface treatment according to an embodiment of the present disclosure may include immersing the cold-rolled stainless steel sheet in a nonoxidizing acid solution for 5 seconds or more, or electrolyzing the cold-rolled stainless steel sheet at a current density of 0.1 A/cm$^2$ or more for 5 seconds or more after the immersing. In this regard, the nonoxidizing acid solution may be a hydrochloric acid (HCl) or sulfuric acid (H$_2$SO$_4$) solution at 50°C or higher with a concentration of 5 wt% or more.

The secondary surface treatment according to an embodiment of the present disclosure may include immersing the cold-rolled stainless steel sheet in an oxidizing acid solution for 5 seconds or more. In this regard, the oxidizing acid solution may be a nitric acid solution at 50°C or higher with a concentration of 5 wt% or more.

Hereinafter, the present disclosure will be described in more detail through examples. However, it is necessary to note that the following examples are only intended to illustrate the present disclosure in more detail and are not intended to limit the scope of the present disclosure. This is because the scope of the present disclosure is determined by matters described in the claims and able to be reasonably inferred therefrom.

Examples

Steel types having the compositions of alloying elements shown in Table 1 below were prepared as slabs by a steel making-continuous casting process. Subsequently, the prepared slabs were hot-rolled at 1200°C to obtain hot-rolled steel sheets having a thickness of 4.5 mm. The hot-rolled steel sheets were heated at 1050°C and repeatedly cold-rolled and annealed at 1000°C to prepare 0.15 mm-thick cold-rolled steel sheets.

In Table 1 below, Steels 1 to 9 are inventive steels, Steels 1 to 3 are ferritic stainless steels, Steels 4 to 6 are austenitic stainless steels, and Steels 7 to 9 are ferritic-austenitic dual-phase stainless steels. Steels 10 and 11 are comparative steels in which the Cr content is less than 15 wt%.

Table 1

| Steel type | Alloying element (wt%) | | | | | | | | | | | | |
|---|---|---|---|---|---|---|---|---|---|---|---|---|---|
| | C | N | Si | Mn | P | S | Cr | Ni | Cu | V | Mo | Nb | Ti |
| Steel 1 | 0.01 | 0.01 | 0.2 | 0.3 | 0.009 | 0.008 | 15.8 | - | - | - | - | - | 0.15 |
| Steel 2 | 0.01 | 0.011 | 0.14 | 0.25 | 0.01 | 0.009 | 22 | - | - | - | 0.18 | 0.35 | 0.03 |
| Steel 3 | 0.008 | 0.012 | 0.11 | 0.15 | 0.03 | 0.004 | 30.2 | - | - | 0.32 | - | 0.18 | 0.11 |
| Steel 4 | 0.12 | 0.04 | 0.65 | 0.9 | 0.025 | 0.005 | 17 | 6.3 | 0.02 | - | - | - | 0.01 |
| Steel 5 | 0.02 | 0.05 | 0.5 | 1.12 | 0.02 | 0.002 | 16.4 | 10 | 0.2 | - | 2 | - | - |
| Steel 6 | 0.04 | 0.08 | 0.5 | 1.4 | 0.015 | 0.001 | 25.6 | 19.8 | 0.4 | - | 0.09 | - | - |
| Steel 7 | 0.028 | 0.25 | 0.7 | 3.1 | 0.01 | 0.001 | 20.1 | 0.92 | 0.84 | - | 0.01 | - | - |
| Steel 8 | 0.016 | 0.14 | 0.43 | 1.43 | 0.013 | 0.001 | 23.1 | 4.11 | 0.25 | - | 0.29 | - | - |
| Steel 9 | 0.015 | 0.28 | 0.34 | 0.82 | 0.012 | 0.001 | 25.2 | 6.3 | - | - | 3.78 | - | - |
| Steel 10 | 0.01 | 0.012 | 0.18 | 0.28 | 0.008 | 0.007 | 14.8 | - | - | - | - | - | 0.15 |
| Steel 11 | 0.10 | 0.035 | 0.45 | 0.8 | 0.015 | 0.005 | 13 | 9 | 0.15 | - | - | - | 0.1 |

The cold-rolled steel sheets manufactured according to Table 1 were surface-treated under surface treatment conditions shown in Table 2 below. The surface treatment was performed by primary and secondary surface treatments under the conditions A to H shown in Table 2 below. The primary surface treatment was performed by immersing the cold-rolled steel sheet in a sulfuric acid solution, as a nonoxidizing acid solution, or electrolyzing the cold-rolled steel sheet after the immersing. The secondary surface treatment was performed by immersing the stainless steel in a nitric acid solution, as an oxidizing acid solution. As an example of the surface treatment shown in Table 2 for better understanding, the surface treatment was performed by immersing the cold-rolled steel sheet of Inventive Example 1 of Table 2 in a 8 wt% sulfuric acid solution at 50°C for 5 seconds for the primary surface treatment (A), and immersing the cold-rolled steel sheet in a 10 wt% nitric acid solution at 50°C for 9 seconds for the secondary surface treatment (D).

The surface oxide element ratio (1) value of Table 2 is a value obtained using Expression (1) below, as a value obtained by measuring the surface of each of the stainless steels according to the inventive examples and comparative examples by X-ray angle-resolved photoemission spectroscopy using an Al-Kα X-ray source under the conditions of the take-off angle of photoelectrons shown in Table 2.

(1)

$$\frac{\text{Sum of atomic concentrations (at\%) of Cr in Cr oxides and Cr hydroxides}}{\text{Sum of atomic concentrations (at\%) of metal elements in entire oxides and hydroxides}}$$

The surface oxide element ratio (1) value was measured using a method described below. First, analysis was conducted under the take-off angle conditions of Table 2 using the PHI Quantera II device, peaks were separated from the binding energy of the metal oxide (MO), the Cr oxide, the Cr hydroxide, the Fe oxide, and the Fe hydroxide using the CasaXPS software using the analysis results, and atomic concentrations were calculated using the same.

The 'sum of atomic concentrations (at%) of Cr in Cr oxides and Cr hydroxides' used to obtain the surface oxide element ratio (1) value was obtained by separating peaks from the binding energy of the Cr oxides and the Cr hydroxides, and fitting the peaks on the Cr 2p spectrum. In this regard, the Cr oxides represent $Cr_3O_4$, $Cr_2O_3$, $CrO_2$, or $CrO_3$, and the Cr hydroxides represent $CrOOH$, $Cr(OH)_2$, or $Cr(OH)_3$.

The 'sum of atomic concentrations (at%) of metal elements in entire oxides and hydroxides' in the surface oxide element ratio (1) value was calculated by adding the 'sum of atomic concentration (at%) of Cr in Cr oxides and Cr hydroxides', the sum of atomic concentration (at%) of metal elements in metal oxides (MO), and the sum of atomic concentration (at%) of Fe in Fe oxides and Fe hydroxides.

The sum of atomic concentrations (at%) of the metal elements in the metal oxide (MO) was calculated by separating peaks from the binding energy of the metal oxide (MO), and fitting the peaks on a spectrum of each metal M. In this regard, the metal oxide (MO) includes a mixed oxide, M represents allying elements contained in the matrix other than Cr and Fe, or any combination thereof, and O represents oxygen. The sum of atomic concentrations (at%) of Fe in the Fe oxides and the Fe hydroxides was obtained by separating peaks from the binding energy of the Fe oxides and the Fe hydroxides, and fitting the peaks to an Fe 2p spectrum.

Contact angle evaluation of Table 2 was performed by cutting the prepared steel sheet having a thickness of 0.1 mm to an area of 20 cm², and dropping 3 µl of distilled water onto the surface using a DSK 10-MK2 device (manufactured by KRUSS GmbH) in the form of droplets to measure the contact angle with the surface.

The bandgap energy of Table 2 refers to a bandgap energy of the surface oxide layer. The bandgap energy of the surface oxide layer was measured using a current sensing atomic force microscope (Keysight 9500 model). The stainless steels of the inventive examples and comparative examples were cut into samples with a size of 1 cm x 1 cm, and the bandgap energy was measured in a current tip mode while a bias applied by a load of 20 nN changes from -10 V to 10 V in a nitrogen atmosphere with a relative humidity of 18% such that the surface oxide layer is measured in an inactive state. A width of a region in which a current detected while the applied bias changes from -10 V to 10 V was measured as the bandgap energy by measuring each sample with an area of 50 µm x 50 µm 5 times. In this case, a silicon tip (Si tip) coated with platinum having a thickness of 30 nm was used as a tip.

Table 2

| | Steel type | Primary surface treatment | Secondary surface treatment | Take-off angle condition of photoelectron | | | Bandgap energy (eV) | Contact angle (°) |
| | | | | Value (1) at 12° | Value (1) at 44° | Value (1) at 85° | | |
|---|---|---|---|---|---|---|---|---|
| Inventive Example 1 | Steel 1 | A | D | 0.26 | 0.28 | 0.27 | 0 | 75 |
| Inventive Example 2 | Steel 1 | B | D | 0.3 | 0.31 | 0.32 | 0 | 70 |
| Comparative Example 1 | Steel 1 | E | D | 0.12 | 0.13 | 0.12 | 2.9 | 90 |
| Inventive Example 3 | Steel 2 | B | D | 0.34 | 0.33 | 0.35 | 0.3 | 65 |
| Inventive Example 4 | Steel 2 | A | D | 0.35 | 0.35 | 0.32 | 0.5 | 68 |
| Comparative Example 2 | Steel 2 | F | D | 0.14 | 0.13 | 0.13 | 3.5 | 97 |

(continued)

| | Steel type | Primary surface treatment | Secondary surface treatment | Take-off angle condition of photoelectron | | | Bandgap energy (eV) | Contact angle (°) |
|---|---|---|---|---|---|---|---|---|
| | | | | Value (1) at 12° | Value (1) at 44° | Value (1) at 85° | | |
| Inventive Example 5 | Steel 3 | B | D | 0.22 | 0.22 | 0.22 | 1 | 65 |
| Inventive Example 6 | Steel 3 | C | D | 0.4 | 0.39 | 0.41 | 0 | 50 |
| Comparative Example 3 | Steel 3 | F | - | 0.18 | 0.17 | 0.16 | 3.2 | 85 |
| Inventive Example 7 | Steel 4 | A | D | 0.33 | 0.32 | 0.34 | 0.2 | 71 |
| Inventive Example 8 | Steel 4 | C | D | 0.35 | 0.35 | 0.34 | 0.22 | 63 |
| Comparative Example 4 | Steel 4 | - | D | 0.11 | 0.11 | 0.12 | 2.9 | 101 |
| Inventive Example 9 | Steel 5 | B | D | 0.28 | 0.28 | 0.28 | 0.23 | 65 |
| Inventive Example 10 | Steel 5 | B | D | 0.26 | 0.26 | 0.26 | 1.8 | 55 |
| Comparative Example 5 | Steel 5 | F | H | 0.1 | 0.1 | 0.09 | 4.5 | 86 |
| Inventive Example 11 | Steel 6 | A | D | 0.73 | 0.75 | 0.79 | 0 | 66 |
| Inventive Example 12 | Steel 6 | B | D | 0.41 | 0.42 | 0.43 | 0 | 70 |
| Comparative Example 6 | Steel 6 | G | - | 0.08 | 0.09 | 0.09 | 6.5 | 109 |
| Inventive Example 13 | Steel 7 | C | D | 0.37 | 0.37 | 0.37 | 0.1 | 67 |
| Inventive Example 14 | Steel 7 | A | D | 0.38 | 0.38 | 0.38 | 0 | 55 |
| Comparative Example 7 | Steel 7 | F | - | 0.07 | 0.08 | 0.07 | 7.6 | 98 |
| Inventive Example 15 | Steel 8 | A | D | 0.65 | 0.7 | 0.8 | 0 | 64 |
| Inventive Example 16 | Steel 8 | C | D | 0.6 | 0.75 | 0.75 | 0 | 55 |
| Comparative Example 8 | Steel 8 | G | H | 0.09 | 0.09 | 0.09 | 6.6 | 92 |
| Inventive Example 17 | Steel 9 | A | D | 0.24 | 0.24 | 0.24 | 1.2 | 78 |
| Inventive Example 18 | Steel 9 | B | D | 0.2 | 0.21 | 0.2 | 1.9 | 71 |

(continued)

| | Steel type | Primary surface treatment | Secondary surface treatment | Take-off angle condition of photoelectron | | | Bandgap energy (eV) | Contact angle (°) |
|---|---|---|---|---|---|---|---|---|
| | | | | Value (1) at 12° | Value (1) at 44° | Value (1) at 85° | | |
| Comparative Example 9 | Steel 9 | - | H | 0.16 | 0.16 | 0.15 | 3.3 | 85 |
| Comparative Example 10 | Steel 10 | E | H | 0.13 | 0.12 | 0.13 | 4.5 | 89 |
| Comparative Example 11 | Steel 10 | E | H | 0.15 | 0.16 | 0.16 | 3.2 | 91 |
| Comparative Example 12 | Steel 11 | F | - | 0.14 | 0.13 | 0.14 | 3.4 | 90 |
| Comparative Example 13 | Steel 11 | A | D | 0.16 | 0.16 | 0.15 | 2.5 | 96 |

A: immersing in a 8 wt% sulfuric acid solution at 50°C for 5 seconds,

B: immersing in a 10 wt% sulfuric acid solution at 50°C for 6 seconds,

C: immersing in a 10 wt% sulfuric acid solution at 50°C, and then electrolyzing at 0.2 A/cm$^2$ for 10 seconds,

D: immersing in a 10 wt% nitric acid solution at 50°C for 9 seconds,

E: immersing in a 8 wt% sulfuric acid solution at 50°C for 3 seconds,

F: immersing in a 10 wt% sulfuric acid solution at 50°C for 3 seconds,

G: immersing in a 10 wt% sulfuric acid solution at 50°C, and electrolyzing at 0.2 A/cm$^2$ for 4 seconds, and

H: immersing in a 10 wt% nitric acid solution at 50°C for 3 seconds.

Hereinafter, stainless steels according to the inventive examples and comparative examples were evaluated based on the results shown in Table 2. Referring to the results of Table 2, Inventive Examples 1 to 18 satisfied the surface oxide element ratio (1) value of 0.2 or more under surface treatment conditions according to the present disclosure, i.e., under the condition where the take-off angle of photoelectrons was from 12° to 85°, and thus it was confirmed that the bandgap energy of the surface oxide layer was not more than 2 eV and the contact angle was not more than 80°. In addition, referring to Inventive Examples 1, 2, 6, 11, 12, 14, 15, and 16, the surface oxide element ratio (1) value may be not less than 0.26 for formation of an ohmic contact between the surface oxide layer and the matrix by adjusting the bandgap energy of the surface oxide layer to 0 eV.

In Comparative Examples 1 and 2, the primary surface treatment was performed for a too short period of time of 3 seconds, and the surface oxide element ratio (1) value under the condition where the take-off angle of photoelectrons was 12°, 44°, and 85° was less than 0.2. As a result, the bandgap energy of the surface oxide layer exceeded 2 eV and the contact angle also exceeded 80°.

In Comparative Example 3, the primary surface treatment was performed for a too short period of time of 3 seconds, and the secondary surface treatment was not performed. In addition, the surface oxide element ratio (1) value under the condition where the take-off angle of photoelectrons was 12°, 44°, and 85° was less than 0.2. As a result, the bandgap energy of the surface oxide layer exceeded 2 eV.

In Comparative Example 4, the primary surface treatment was not performed and the surface oxide element ratio (1) value under the condition where the take-off angle of photoelectrons was 12°, 44°, and 85° was less than 0.2. As a result, the bandgap energy of the surface oxide layer exceeded 2 eV and the contact angle also exceeded 80°.

In Comparative Example 5, the primary and secondary surface treatments were performed for a too short period of time of 3 seconds, and the surface oxide element ratio (1) value under the condition where the take-off angle of photoelectrons was 12°, 44°, and 85° was less than 0.2. As a result, the bandgap energy of the surface oxide layer exceeded 2 eV and the contact angle also exceeded 80°.

In Comparative Examples 6 and 7, the primary surface treatment was performed for a too short period of time of 3 seconds, and the secondary surface treatment was not performed. In addition, the surface oxide element ratio (1) value under the condition where the take-off angle of photoelectrons was 12°, 44°, and 85° was less than 0.2. As a result, the bandgap energy of the surface oxide layer exceeded 2 eV, and the contact angle also exceeded 80°.

In Comparative Example 8, the primary and secondary surface treatments were performed for a too short period of time of 3 seconds, and the surface oxide element ratio (1) value under the condition where the take-off angle of photoelectrons was 12°, 44°, and 85° was less than 0.2. As a result, the bandgap energy of the surface oxide layer exceeded 2 eV, and the contact angle also exceeded 80°.

In Comparative Example 9, the primary surface treatment was not performed, and the secondary surface treatment was performed for a too short period of time of 3 seconds. In addition, the surface oxide element ratio (1) value under the condition where the take-off angle of photoelectrons was 12°, 44°, and 85° was less than 0.2. As a result, the bandgap energy of the surface oxide layer exceeded 2 eV and the contact angle also exceeded 80°.

In Comparative Examples 10 and 11, the primary and secondary surface treatments were performed for a too short period of time of 3 seconds. In addition, the Cr content was less than 15 wt%, and the surface oxide element ratio (1) value under the condition where the take-off angle of photoelectrons was 12°, 44°, and 85° was less than 0.2. As a result, the bandgap energy of the surface oxide layer exceeded 2 eV, and the contact angle also exceeded 80°.

In Comparative Example 12, the primary surface treatment was not performed, and the secondary surface treatment was performed for a too short period of time of 3 seconds. In addition, the Cr content was less than 15 wt%, and the surface oxide element ratio (1) value under the condition where the take-off angle of photoelectrons was 12°, 44°, and 85° was less than 0.2. As a result, the bandgap energy of the surface oxide layer exceeded 2 eV, and the contact angle also exceeded 80°.

Although the primary and second surface treatments were performed for 5 seconds or more in Comparative Example 13, the Cr content was less than 15 wt%, and the surface oxide element ratio (1) value under the condition where the take-off angle of photoelectrons was 12°, 44°, and 85° was less than 0.2. As a result, the bandgap energy of the surface oxide layer exceeded 2 eV and the contact angle exceeded 80°.

Accompanying FIGS. 1A and 1B are graphs illustrating correlation between the surface oxide element ratio (1) value and the bandgap energy based on the results of Table 2. In FIGS. 1A and 1B, the take-off angles of photoelectrons are 12° and 85°, respectively. In FIGS. 1A and 1B, the X-axis represents the values of the surface oxide element ratio (1), and the Y-axis represents the contact angles (°).

Referring to FIGS. 1A and 1B, when the surface oxide element ratio (1) value is 0.2 or more, it may be confirmed that a contact angle of 80° or less may be obtained. When the surface oxide element ratio (1) value is less than 0.2, the contact angle exceeds 80°. Based thereon, it may be confirmed that the contact angle may be adjusted to 80° or less by controlling the surface oxide element ratio (1) value to 0.2 or more.

In addition, regions indicated by dashed lines in FIGS. 1A and 1B are regions in which the surface oxide element ratio (1) value is not less than 0.2 and the contact angle is not more than 80°. Referring to FIGS. 1A and 1B, the stainless steels of the inventive examples are observed in the regions indicated by dashed lines of FIGS. 1A and 1B indicating that a stainless steel for a fuel cell separator having excellent surface hydrophilicity with a contact angle of 80° or less and excellent surface electrical conductivity may be provided by controlling the surface oxide element ratio (1) value to not less than 0.2.

Based on the results of the above-described examples, the present disclosure may provide a stainless steel for a fuel cell separator and a method for manufacturing the same, the stainless steel having excellent hydrophilicity with a contact angle of 80° or less by increasing surface free energy between the stainless steel and water and excellent surface electrical conductivity applicable to materials for electric contact and fuel cell separators by making the surface oxide layer having semiconducting properties conductive.

In addition, it can be seen that a stainless steel for a fuel cell separator having excellent surface electrical conductivity with a bandgap energy of the surface oxide layer of 2 eV or less and excellent surface hydrophilicity with a contact angle with water of 80° or less may be provided by controlling the surface oxide element ratio (1) value to 0.2 or more, when the surface of the stainless steel is measured by X-ray angle-resolved photoemission spectroscopy using an Al-K$\alpha$ X-ray source under the condition where the take-off angle of photoelectrons is from 12° to 85°.

While the present disclosure has been particularly described with reference to exemplary embodiments, it should be understood by those of skilled in the art that various changes in form and details may be made without departing from the spirit and scope of the present disclosure.

[Industrial Applicability]

The stainless steel for a fuel cell separator according to the present disclosure has excellent surface hydrophilicity and electrical conductivity and manufacturing costs and manufacturing time may be reduced according to the present disclosure because no additional post-processing steps are required. Therefore, the stainless steel may be industrially applicable.

**Claims**

1. A stainless steel for a fuel cell separator having excellent surface hydrophilicity and electrical conductivity,

   wherein a value of a surface oxide element ratio (1) below is 0.2 or more, when measured on the surface of a stainless steel containing 15 wt% or more of Cr by X-ray angle-resolved photoemission spectroscopy using an Al-K$\alpha$ X-ray source under the condition where a take-off angle of photoelectrons is from 12° to 85°, and a contact angle is 80° or less:

   $$(1)$$

   $$\frac{\text{Sum of atomic concentrations (at\%) of Cr in Cr oxides and Cr hydroxides}}{\text{Sum of atomic concentrations (at\%) of metal elements in entire oxides and hydroxides}}$$

   wherein the Cr oxide represents $Cr_3O_4$, $Cr_2O_3$, $CrO_2$, or $CrO_3$, and the Cr hydroxide represents $CrOOH$, $Cr(OH)_2$, or $Cr(OH)_3$; and
   the entire oxides and hydroxides comprise the Cr oxide, the Cr hydroxide, an Fe oxide, an Fe hydroxide, and a metal oxide (MO), wherein the metal oxide (MO) includes a mixed oxide, M represents an alloying element contained in a matrix other than Cr and Fe or a combination thereof, and O represents oxygen.

2. The stainless steel for a fuel cell separator according to claim 1, wherein a surface oxide layer of the stainless steel has a bandgap energy of 2 eV or less.

3. The stainless steel for a fuel cell separator according to claim 1, wherein the surface oxide layer of the stainless steel forms an ohmic contact with the matrix.

4. A method for manufacturing the stainless steel for a fuel cell separator having excellent surface hydrophilicity and electrical conductivity according to claim 1, the method comprising a primary surface treatment of immersing a cold-rolled stainless steel sheet in a nonoxidizing acid solution and electrolyzing the stainless steel sheet after the immersing, and a secondary surface treatment of immersing the stainless steel sheet in an oxidizing acid solution.

5. The method according to claim 4, wherein the primary surface treatment comprises immersing the cold-rolled stainless steel sheet in the nonoxidizing acid solution for 5 seconds or more, or electrolyzing the stainless steel sheet at a current density of 0.1 A/cm$^2$ or more for 5 seconds or more after the immersing, wherein the nonoxidizing acid solution is a hydrochloric acid or sulfuric acid solution with a concentration of 5 wt% or more at 50°C or higher.

6. The method according to claim 4, wherein the secondary surface treatment comprises immersing the cold-rolled stainless steel sheet in the oxidizing acid solution for 5 seconds or more, wherein the oxidizing acid solution is a nitric acid solution with a concentration of 5 wt% or more at 50°C or higher.

[FIG. 1A]

[FIG. 1B]

## INTERNATIONAL SEARCH REPORT

| International application No. |
|---|
| **PCT/KR2021/016994** |

### A. CLASSIFICATION OF SUBJECT MATTER

**H01M 8/0228**(2016.01)i; **H01M 8/021**(2016.01)i; **H01M 8/0215**(2016.01)i; **H01M 8/0258**(2016.01)i; **C25D 9/10**(2006.01)i; **C25D 11/34**(2006.01)i; **C25F 1/06**(2006.01)i; **C23G 1/08**(2006.01)i

According to International Patent Classification (IPC) or to both national classification and IPC

### B. FIELDS SEARCHED

Minimum documentation searched (classification system followed by classification symbols)

H01M 8/0228(2016.01); C23C 18/16(2006.01); C23C 18/18(2006.01); H01M 8/02(2006.01); H01M 8/021(2016.01); H01M 8/04(2006.01); H01M 8/10(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 스테인리스 강(stainless steel), 표면 친수성(surface hydrophilicity), 전기 전도성 (electrical conductivity), 표면 처리(surface treatment), 연료전지(fuel cell), 분리판(separator)

### C. DOCUMENTS CONSIDERED TO BE RELEVANT

| Category* | Citation of document, with indication, where appropriate, of the relevant passages | Relevant to claim No. |
|---|---|---|
| X | KR 10-2018-0107050 A (POSCO) 01 October 2018 (2018-10-01)<br>See claims 1-7; paragraph [0011]; and table 2. | 1-2,4 |
| Y | | 5-6 |
| A | | 3 |
| Y | KR 10-2017-0095880 A (TOYO KOHAN CO., LTD.) 23 August 2017 (2017-08-23)<br>See claims 1-10. | 5-6 |
| DA | KR 10-1729037 B1 (POSCO) 24 April 2017 (2017-04-24)<br>See claims 1 and 7; and paragraph [0019]. | 1-6 |
| A | KR 10-2013-0121930 A (JFE STEEL CORPORATION) 06 November 2013 (2013-11-06)<br>See entire document. | 1-6 |

| ✓ Further documents are listed in the continuation of Box C. | ✓ See patent family annex. |
|---|---|

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 March 2022** | **07 March 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

International application No.

**PCT/KR2021/016994**

| C. | DOCUMENTS CONSIDERED TO BE RELEVANT | |
|---|---|---|
| Category* | Citation of document, with indication, where appropriate, of the relevant passages | Relevant to claim No. |
| A | KR 10-2010-0095708 A (AMTE CO., LTD.) 01 September 2010 (2010-09-01)<br>See entire document. | 1-6 |

Form PCT/ISA/210 (second sheet) (July 2019)

**INTERNATIONAL SEARCH REPORT**
Information on patent family members

International application No.

**PCT/KR2021/016994**

| Patent document cited in search report | | | Publication date (day/month/year) | Patent family member(s) | | | Publication date (day/month/year) |
|---|---|---|---|---|---|---|---|
| KR | 10-2018-0107050 | A | 01 October 2018 | KR | 10-2020500 | B1 | 10 September 2019 |
| KR | 10-2017-0095880 | A | 23 August 2017 | CA | 2969897 | A1 | 16 June 2016 |
| | | | | CN | 107002240 | A | 01 August 2017 |
| | | | | CN | 107002240 | B | 03 January 2020 |
| | | | | EP | 3231893 | A1 | 18 October 2017 |
| | | | | EP | 3231893 | A4 | 05 September 2018 |
| | | | | EP | 3231893 | B1 | 31 March 2021 |
| | | | | US | 10287689 | B2 | 14 May 2019 |
| | | | | US | 2017-0327953 | A1 | 16 November 2017 |
| | | | | WO | 2016-093145 | A1 | 16 June 2016 |
| KR | 10-1729037 | B1 | 24 April 2017 | CN | 108368612 | A | 03 August 2018 |
| | | | | CN | 108368612 | B | 09 February 2021 |
| | | | | EP | 3392372 | A1 | 24 October 2018 |
| | | | | EP | 3392372 | B1 | 09 June 2021 |
| | | | | EP | 3879002 | A1 | 15 September 2021 |
| | | | | JP | 2019-505972 | A | 28 February 2019 |
| | | | | JP | 6633772 | B2 | 22 January 2020 |
| | | | | US | 2020-0280075 | A1 | 03 September 2020 |
| | | | | WO | 2017-105142 | A1 | 22 June 2017 |
| KR | 10-2013-0121930 | A | 06 November 2013 | CN | 103314475 | A | 18 September 2013 |
| | | | | CN | 103314475 | B | 28 September 2016 |
| | | | | EP | 2667439 | A1 | 27 November 2013 |
| | | | | EP | 2667439 | B1 | 17 October 2018 |
| | | | | JP | 2013-093299 | A | 16 May 2013 |
| | | | | JP | 6144006 | B2 | 07 June 2017 |
| | | | | KR | 10-1873176 | B1 | 29 June 2018 |
| | | | | KR | 10-2017-0026648 | A | 08 March 2017 |
| | | | | TW | 201231720 | A | 01 August 2012 |
| | | | | TW | I515336 | B | 01 January 2016 |
| | | | | US | 2013-0302718 | A1 | 14 November 2013 |
| | | | | US | 9653738 | B2 | 16 May 2017 |
| | | | | WO | 2012-098689 | A1 | 26 July 2012 |
| KR | 10-2010-0095708 | A | 01 September 2010 | KR | 10-1078231 | B1 | 01 November 2011 |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020140081161
- KR 1020130099148
- JP 2004149920 A
- KR 101410479
- KR 1020130136713
- JP 2009117114 A
- JP 2007119856 A
- KR 101729037